# EUROPEAN PATENT SPECIFICATION

(11) **EP 4 477 852 B1**
(45) Date of publication and mention of the grant of the patent: **25.11.2026**
(21) Application number: 23178570.0
(22) Date of filing: 12.06.2023
(51) Int. Cl.: F01P 11/12, F01P 3/18, B60K 11/04, F01P 11/10, B01D 46/52, B60H 3/06, B60H 1/00, B01D 46/10, B60K 11/08

(54) **FILTER COOLER SYSTEM FOR A MOTOR VEHICLE**
FILTERKÜHLERSYSTEM FÜR EIN KRAFTFAHRZEUG
SYSTÈME DE REFROIDISSEMENT DE FILTRE POUR UN VÉHICULE AUTOMOBILE

(43) Date of publication of application: 18.12.2024
(73) Proprietor: MANN+HUMMEL GmbH, 71636 Ludwigsburg (DE)
(72) Inventor: DOS SANTOS ASCENSAO, Macario Francisco, 71636 Ludwigsburg (DE); THEBAULT, Eric, 71636 Ludwigsburg (DE); JUNGINGER, Bernd, 71636 Ludwigsburg (DE)
(74) Representative: Mann + Hummel Intellectual Property

(56) References cited:
- WO-A1-2015/171183
- WO-A1-2019/110223
- DE-A1- 102012 009 950
- DE-U1- 202006 004 522

## Description

### TECHNICAL FIELD

The present invention refers to a filter cooler system for a motor vehicle, comprising a cooler assembly; an air duct having at least one inlet opening; and a filter assembly with a filter element.

### BACKGROUND ART

Such a filter cooler system is known from WO 2019/110223 A1 and WO 2015/171183A1A.

WO 2019/110223 A1 discloses a motor vehicle, which has at least one air inlet opening in a front region, behind which an ambient air cleaning device is arranged, which is designed, for the removal of particles, in particular fine dust and/or gases from the ambient air. The ambient air cleaning device has at least one filter element with at least one filter medium that is folded to form at least one filter bellows, wherein the filter element has a plurality of fold stabilising means which support the filter bellows and are provided at a lateral distance of no more than 130 mm from one another.

WO 2015/171183A1A discloses a method and device for removing airborne pollutants. The device includes a multilayer filter with a material structure to allow air flow therethrough is positioned in front of a radiator of a land vehicle for removal of airborne pollutants from the environment. Each layer of the multilayer filter is formed of a pollutant capture material. Layers of filter material may be formed of a hepa material, a carbon material, a magnetized material or a spongy material. A protective screen may be positioned in front of the filter air intake side.

Such filter cooler systems can be used to filter ambient air in order to decrease the total dust emission balance of a vehicle. To this end, the filter element may remove dust particles from the ambient air in order to compensate, preferably overcompensate, the dust production during use of the vehicle.

Depending on the intended area of use or with regard to production cost, it may be sufficient to equip some but not all vehicles of a certain type with a filter element for ambient air filtration. Furthermore, the optional mounting of an air filter element shall not alter insurance classification of the vehicle.

It is an object of the invention to facilitate mounting of an air filter assembly to a cooler assembly for a vehicle.

This is achieved by a filter cooler system according to claim 1, a filter assembly according to claim 12 and a motor vehicle according to claim 13. Advantageous embodiments are given in the subclaims and the description. Preferably, the filter element is permanently affixed to the holder. For instance, the filter element may be glued to the holder. The filter element is preferably a flat filter element. With a flat filter element, the risk of damage to the cooler system during an accident is reduced. A thickness of the filter element may be less than 5 cm, preferably less than 3 cm. The filter element may be pleated.

The air duct is generally arranged in front of the cooler assembly. The air duct is typically designed for arrangement behind a front skirt of the vehicle or for being part of the front skirt.

According to the invention, the filter element is arranged between the air duct and the cooler assembly. Consequently, air entering a front end of the vehicle is guided through the inlet opening first to the filter element and then to the cooler assembly. Furthermore, the filter element protects the cooler assembly from being hit by stones or the like. The air duct may be sealed against the filter element using foam.

Further according to the invention, the cooler assembly, the filter assembly, and the air duct are fixed to at least one common mounting tab. This facilitates mounting of the filter cooler system. A mounting sequence for the filter cooler system is typically arranging the cooler assembly at the mounting tab, arranging the filter assembly at the mounting tab, arranging the air duct at the mounting tab, fixing the air duct to the mounting tab.

By fixing the air duct to the mounting tab, also the filter assembly and preferably the cooler assembly are fixedly secured at the mounting tab. In particular, the filter assembly is fixed to the mounting tab via the holder. In other words, the holder is fixed to the mounting tab, thereby securing the filter element relative to the mounting tab, and consequently relative to the air duct and the cooler assembly.

If at all, only a slight modification of the air duct is required for use with or without the filter assembly. In particular, slightly shifting the position of a mounting surface of the air duct forward or backward a few millimeters may suffice to adapt the air duct for use with or without a filter assembly.

The mounting tab may also be referred to as a mounting stud. Typically, the mounting tab or stud extends along a longitudinal axis, preferably with a rectangular cross section. A front surface of the mounting tab is preferably arranged perpendicular to the longitudinal axis.

The mounting tab is typically permanently fixed to the body. Preferably, four mounting tabs are provided. With four mounting tabs at the corners of the filter assembly, of the cooler assembly and of the air duct a particularly solid mounting of the aforementioned components can be achieved.

Preferably, the holder is clamped (in other words compressed) between the air duct and the mounting tab. This contributes to securely fixing the filter assembly to the mounting tab.

Preferably, the cooler assembly, the filter assembly and the air duct are screwed to the at least one common mounting tab. A screw penetrates at least through the air duct and into a screw hole of the mounting tab. A particular secure and tight fixation can be obtained using at least one screw. Further, screws are easy to install and allow for automatic adaption of the fixation to the presence or absence of the filter assembly. The screw hole in the mounting tab is typically provided with an internal thread for engagement of an external thread of the screw.

In an advantageous embodiment, the screw penetrates through the holder of the filter assembly. Consequently, even if the screw is not completely tightened, the holder cannot disengage from the mounting tab. Typically, an opening of the holder, through which the screw passes, is free of threads.

Alternatively, the screw may pass besides the holder into the mounting tab. In this embodiment, an engagement section of the holder may complement a mounting surface of the air duct in order to completely covering a front surface of the mounting tab. Both, the mounting section of the holder and the mounting surface of the air duct are preferably pressed against the front surface of the mounting tab by tightening the screw.

A mounting eye of the cooler assembly may engage around the mounting tab. This ensures that the cooler assembly rests in place while mounting the other components of the system. Preferably, the mounting eye is completely closed in circumferential direction. The mounting eye may surround the mounting tab.

In an advantageous embodiment, the holder of the filter assembly comprises a plurality claws for engagement on different sides of the mounting tab. The claws position the filter assembly transverse to a longitudinal direction of the mounting tab. In particular during assembly of the system, i. e. prior to fixation of the air duct, the claws may hold the filter assembly to the mounting tab in a substantially vertical plane.

It may be provided, that two claws engage on two adjacent side faces of the mounting tab. Thereby, the filter assembly is positioned in two different directions relative to the mounting tab. The two claws may be orthogonal to one another.

Additionally or alternatively, two claws may engage on two opposing side faces of the mounting tab. In particular, two pairs of claws may engage on two pairs of opposing side faces. Opposing claws ensure precise alignment of the filter assembly relative to the mounting tab.

The holder may comprise two mounting rails and a grid frame. The grid frame stabilizes the filter element. The filter element may be glued to the grid frame. Preferably, a support leg protrudes from the grid frame. The support leg may engage a lower side of the filter element.

The mounting rails each may have a slot for engagement of the grid frame. The slots facilitate mounting of the filter assembly.

Preferably, the holder has at least one latching hook for engagement on the cooler assembly. This prevents the filter assembly from disengaging from the mounting tab during assembly of the system.

The holder may have a centering hole into which a centering pin of the air duct engages. This contributes to ensure alignment of the air duct relative to the filter assembly, and thereby relative to the mounting tab on which the filter assembly is (pre-) mounted, in particular prior to insertion of a screw.

The filter element may be a fine dust filter element, preferably according to class ISO ePM2,5 70%, particularly preferably according to class ISO ePM1 70%, of EN ISO 16890.

The invention also relates to a filter assembly for a filter cooler system according to the invention. The filter assembly comprises a filter element and a holder. The holder is designed to be fixed to a mounting tab. In particular, the holder is designed to be clamped between an air duct and the mounting tab. The filter assembly may comprise further features as described above. The filter element may be glued to the holder. The filter element is preferably a flat filter element. The holder may have an opening free of threads, through which a screw may be led to fix the holder to the mounting tab. The holder may comprise a plurality of claws extending perpendicular to an extension plane of the flat filter element. The holder may comprise two mounting rails and a grid frame. The mounting rails each may have a slot for engagement of the grid frame. The holder may have a centering hole for engagement of a centering pin of the air duct.

The invention further relates to a motor vehicle, in particular a passenger car, van or truck, comprising a filter cooler system according to the invention, as described above.

Preferably, the at least one mounting tab is fixed to a body of the vehicle. This allows securely positioning the filter assembly as required, in particular at a front end of the vehicle.

The filter cooler system may be arranged at a front end of the vehicle, in particular behind a front skirt and/or in front of an engine, in particular a combustion engine or an electric engine. In this position, the efficiency of both the filter element and the cooler are increased. With a combustion engine, reduction of ambient air pollution may be required to fulfill legal requirements.

### BRIEF DESCRIPTION OF DRAWINGS

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
Fig. 1 shows a vehicle according to the invention having a filter cooler system according to the invention in a schematic sketch.
Fig. 2 shows a first embodiment of a filter cooler system according to the invention, in a schematic exploded view.
Fig. 3 shows a mounting eye of a cooler assembly of the filter cooler system of Fig. 2 engaging around a mounting tab, in a schematic perspective view.
Fig. 4 shows a holder of a filter assembly of the filter cooler system of Fig. 2 arranged on the mounting tab, in a schematic perspective view.
Fig. 5 shows a schematic front view of the filter cooler system of Fig. 2 in an assembled state with an air duct attached to the mounting tabs.
Fig. 6 shows a schematic side view of the filter cooler system of Fig. 2 in an assembled state.
Fig. 7 shows a schematic longitudinal section through a mounting tab of the filter cooler system of Fig. 2 with the holder and the air duct being fixed to the mounting tab by a screw.
Fig. 8 shows a schematic cross section through a mounting tab of the filter cooler system of Fig. 2 with angular claws of the air duct engaging edges of the mounting tab.
Fig. 9 shows a similar view as Fig. 4 for a second embodiment of a filter cooler system according to the invention, with a mounting eye of a cooler assembly engaging around a mounting tab and a holder of a filter assembly arranged on the mounting tab.
Fig. 10 shows a schematic longitudinal section through the mounting tab of the filter cooler system of Fig. 9, with the holder and the air duct being pressed against a front surface of the mounting tab besides each other by a screw.
Fig. 11 shows a schematic cross section through the mounting tab of the filter cooler system of Fig. 9 with claws of the holder engaging on adjacent side faces of the mounting tab.

### DETAILED DESCRIPTION

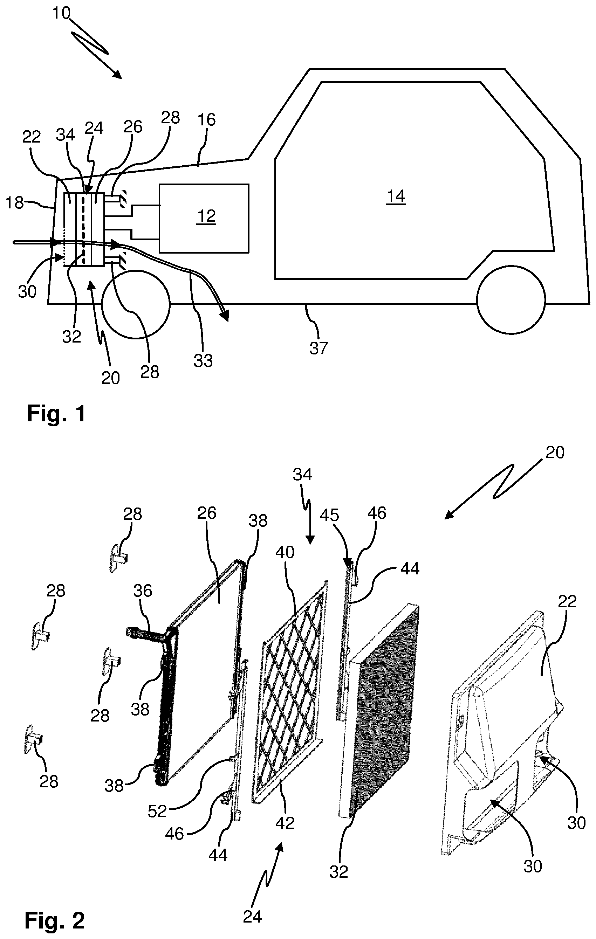

Figure 1 shows a vehicle 10, here a passenger car. The vehicle is powered by an engine 12, in this case a combustion engine. Passengers and luggage may be accommodated inside a cabin 14. A body 16 of the vehicle 10 comprises a front skirt 18.

The vehicle 10 comprises a filter cooler system 20. The filter cooler system 20 is arranged behind the front skirt 18 and in front of the engine 12 at a front end of the vehicle 10.

The filter cooler system 20 comprises an air duct 22, a filter assembly 24 and a cooler assembly 26. The filter assembly 24 is arranged behind the air duct 22 and in front of the cooler assembly 26. The air duct 22, the filter assembly 24, and the cooler assembly 26 are collectively mounted to several, here four, common mounting tabs 28, two of which are visible in Figure 1. The mounting tabs 28 are fixed to the body 16, as indicated by hatchings.

Air passes through not depicted openings in the front skirt 18 and enters the air duct 22 at an inlet opening 30. The air is guided to the filter assembly 24 in the air duct 22. A filter element 32 of the filter assembly 24 captures particles, in particular fine dust, from air flow 33. Here, the filter element is a fine dust filter element. The filter element 32 can be made from pleated filter paper. The filter element 32 is attached to a holder 34 of the filter assembly 24, which holder 34 provides fixation of the filter assembly 24 to the mounting tabs 28.

After passing through the filter element 32, the air strikes the cooler assembly 26. Thereby, cooling is provided to a cooling fluid for the engine 12, cf. fluid lines 36.

After having passed the cooler assembly 26, the air is released into the environment of the vehicle 10, for instance through an underside 37 of the vehicle 10. The air, which is guided through the filter cooler assembly 26 is in particular neither introduced into the engine 12 nor into the cabin 14.

Figure 2 shows an embodiment of a filter cooler system 20 in an exploded view.

Four mounting tabs 28 have a basically rectangular cross section and extend along a longitudinal axis.

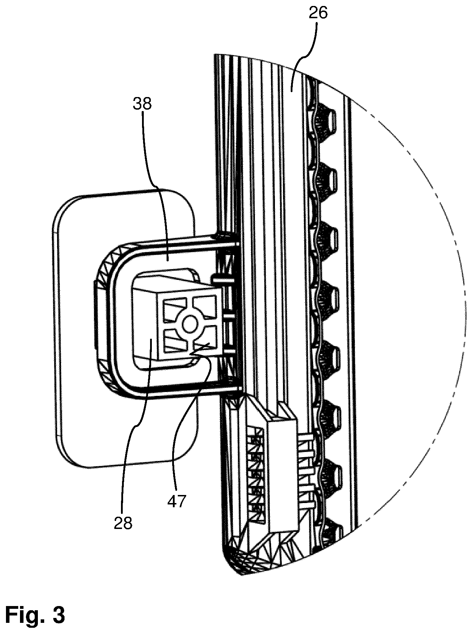

A cooler assembly 26 has four mounting eyes 38, each configured to engage around one of the mounting tabs 28, cf. Figure 3. Here, the mounting eyes 38 are completely closed in circumferential direction.

A filter assembly 24 of system 20 comprises a holder 34 and a plate shaped filter element 32. The holder 34 comprises a grid frame 40, to which the filter element 32 is affixed, e.g., glued or welded. A support leg 42 protrudes from a lower side of grid frame 40. The support leg 42 ensures vertical support and vertical alignment of filter element 32.

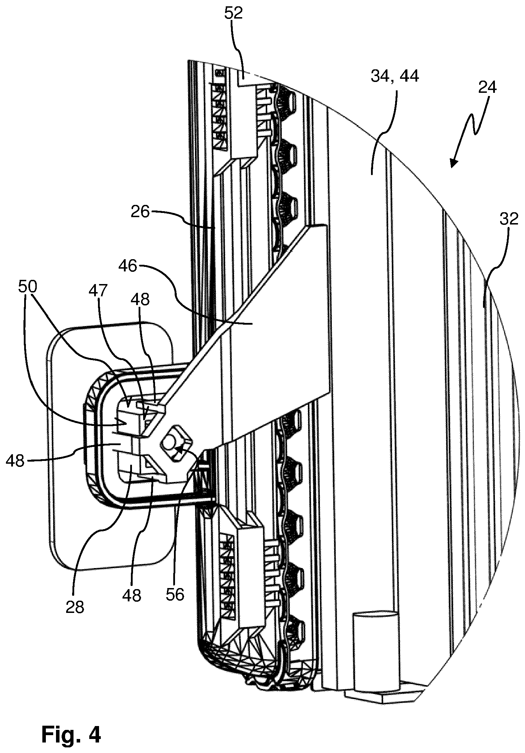

The holder 34 further comprises two mounting rails 44. Each mounting rail 44 has a slot 45 for receiving the grid frame 40. The holder 34 has four mounting brackets 46 for fixation to the mounting tabs 28, cf. also Figure 4. Here, two mounting brackets 46 are provided at each of the mounting rails 44.

A front surface 47 of the mounting tabs 28 serves for axial abutment of the mounting brackets 46 of holder 34. Four claws 48, which protrude from each of the mounting brackets 46, engage the mounting tab 28 on its four side faces 50.

The holder 34 further has two latching hooks 52, one of which is provided at each mounting rail 44, cf. in particular Figure 2. During assembly of system 20, the latching hooks 52 engage the cooler assembly 26 in a snap fit, to prevent the filter assembly 24 from disengaging form the mounting tabs 28 prior to fixation of air duct 22.

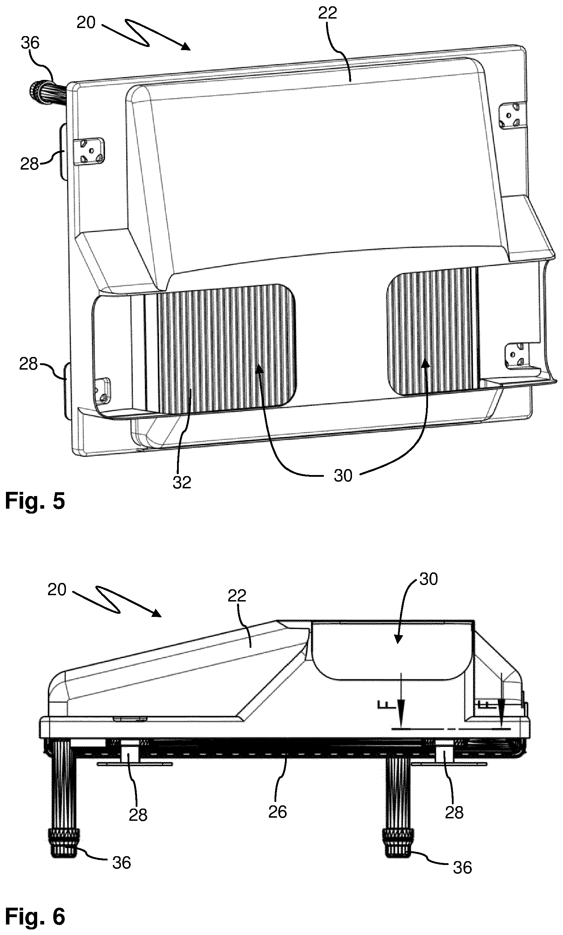

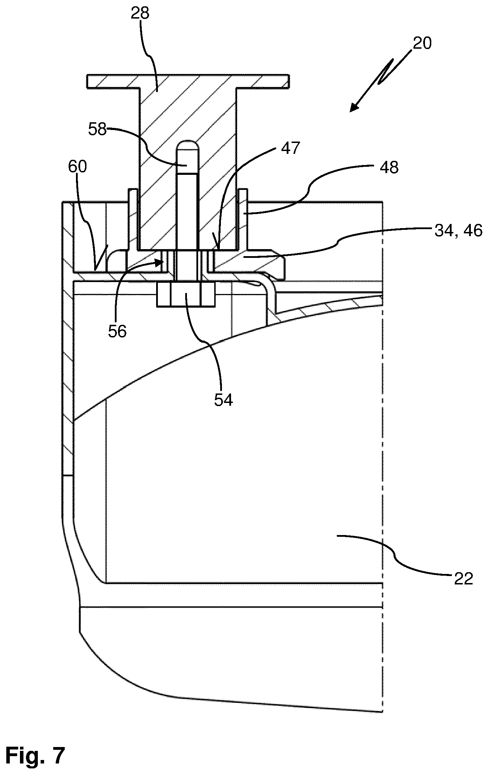

Finally, the air duct 22, which in this embodiment has two inlet openings 30, is mounted to the mounting tabs 28 in front of the filter assembly 24, cf. Figures 5 and 6. At each mounting tab 28, a screw 54 is used to fix the air duct 22 and the filter assembly 24 to the respective mounting tab 28, cf. Figure 7. In this embodiment, the screw 54 penetrates through the air duct 22 and through an opening 56 of the mounting bracket 46 of the holder 34. No threaded engagement of the screw 54 with the air duct 22 and the holder 34 is provided. The screw 54 engages internal threads (not shown) of a screw hole 58 of the mounting tab 28, the screw hole 59 extending along the mounting tab 28 perpendicular to its front surface 47. Thereby, the holder 34, particularly its mounting brackets 46, is held clamped between a mounting surface 60 of the air duct 22 and the front surface 47 of the mounting tab 28.

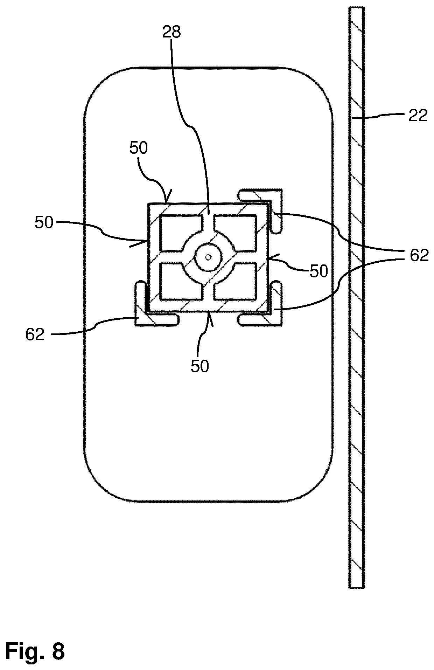

As can be seen in Figure 8, angular claws 62 protruding from the air duct 22 near its mounting surface 60 (see Figure 7) may engage edges between the side faces 50 of the mounting tab 28.

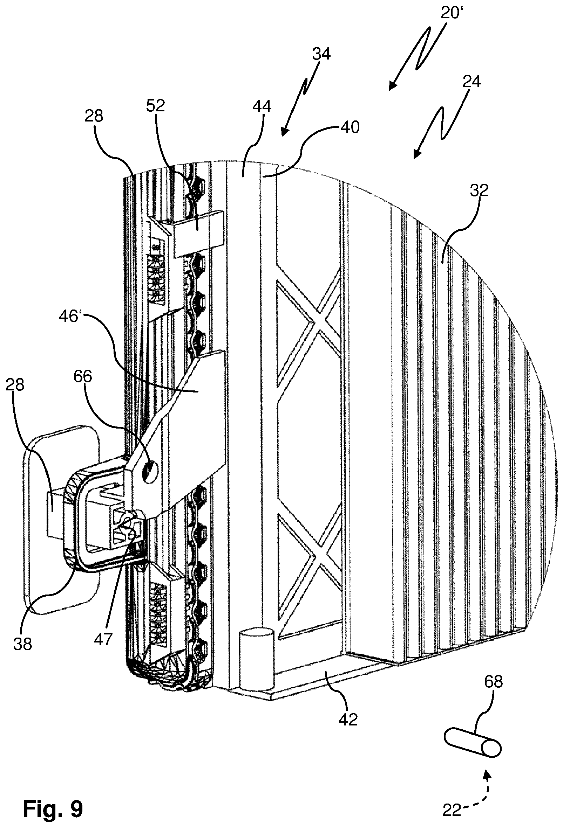

Figures 9, 10 and 11 show an embodiment of filter cooler system 20', which in many aspects corresponds to the filter cooler system 20 depicted in Figures 2 to 8. Mainly the differences will be described below. For common features, reference is made to the description above and Figures 2 to 8.

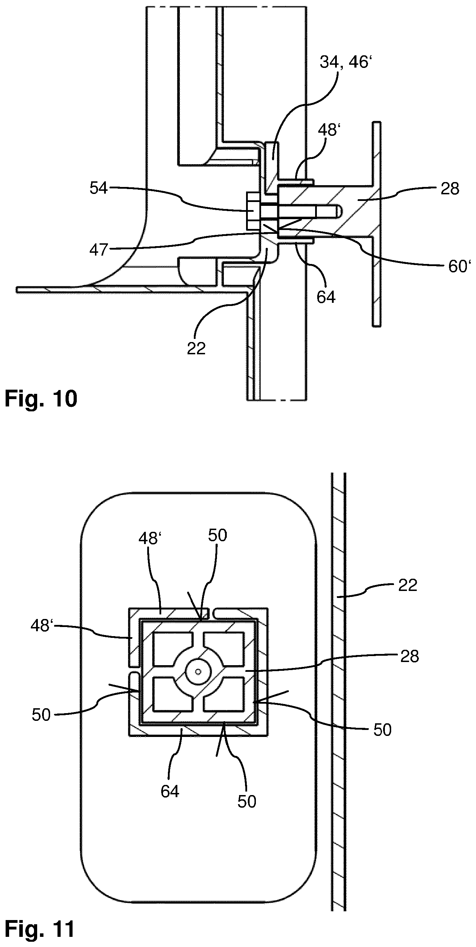

A mounting bracket 46' of holder 34 is designed to partially cover a front surface 47 of a mounting tab 28, cf. Figure 9. A mounting surface 60' of air duct 22 is designed to abut the remainder of the front surface 47, cf. Figure 10. By tightening a screw 54, both the air duct 22 and the mounting bracket 46' of holder 34 are pressed against the mounting tab 28. In particular, the mounting bracket 46' of the holder 34 is clamped between the air duct 22 and the mounting tab 28. The screw 54 penetrates through the air duct 22 and passes besides the mounting bracket 46'.

In this embodiment of system 20', two claws 48', which are integrally formed with one another, protrude from mounting bracket 46 and engage two adjacent side faces 50 of the mounting tab 28, cf. Figure 11. An annular claw 64 of the air duct 22, which annular claw 64 is partially closed in circumferential direction, engages all four side faces 50 of the mounting tab 28. The claws 48' of holder 34 are received in a circumferentially open section of the annular claw 64 of the air duct 22.

In this embodiment of system 20', the holder 34 is provided with centering holes 66, which may be arranged at the mounting brackets, cf. Figure 9. Centering pins 68 of the air duct 22 are received in the centering holes 66, when the air duct 22 is being attached. The centering pins 68 may be integrally formed with the air duct 22. A mounting eye of the cooler assembly may engage around the mounting tab. A snap fit between the filter assembly and the cooler assembly may be provided.

### REFERENCE SIGNS LIST

Vehicle 10
Engine 12
Cabin 14
Body 16
Front skirt 18
Filter cooler system 20; 20'
Air duct 22
Filter assembly 24
Cooler assembly 26
Mounting tab 28
Inlet opening 30
Filter element 32
Air flow 33
Holder 34
Fluid line 36
Underside 37
Mounting eye 38
Grid frame 40
Support leg 42
Mounting rail 44
Slot 45
Mounting bracket 46; 46'
Front surface 47
Claw 48; 48'
Side face 50
Latching hook 52
Screw 54
Opening 56
Screw hole 58
Mounting surface 60; 60'
Angular claw 62
Annular claw 64
Centering hole 66
Centering pin 68

## Claims

1. A filter cooler system (20, 20') for a motor vehicle (10), the filter cooler system (20, 20') being configured to remove dust particles from ambient air to compensate dust production during use of the motor vehicle (10), so as to decrease total dust emission balance of the motor vehicle (10), the filter cooler system (20, 20') comprising:
a cooler assembly (26) comprising a liquid cooler for feeding cooling liquid to an engine of the motor vehicle (10);
an air duct (22) having at least one inlet opening (30); and
a filter assembly (24) comprising a filter element (32) and a holder (34), the filter element (32) being arranged between the air duct (22) and the cooler assembly (26),
**characterized in that**
the cooler assembly (26), the holder (34) and the air duct (22) are fixed to at least one common mounting tab (28), and
the holder (34) is clamped between the air duct (22) and the at least one mounting tab (28).

2. The filter cooler system (20, 20') according to claim 1, wherein the cooler assembly (26), the filter assembly (24) and the air duct (22) are screwed to the at least one common mounting tab (28) by a screw (54) penetrating at least through the air duct (22) and into a screw hole (58) of the at least one mounting tab (28).

3. The filter cooler system (20) according to claim 2, wherein the screw (54) further penetrates through the holder (34) of the filter assembly (24).

4. The filter cooler system (20, 20') according to one of the preceding claims, wherein the cooler assembly (26) comprises a mounting eye (38) for engagement around the at least one mounting tab (28).

5. The filter cooler system (20, 20') according to one of the preceding claims, wherein the holder (34) of the filter assembly (24) comprises a plurality of claws (48, 48') for engagement on different sides of the at least one mounting tab (28).

6. The filter cooler system (20, 20') according to claim 5, wherein the plurality of claws (48, 48') comprises two claws (48, 48') for engagement on two adjacent side faces (50) of the at least one mounting tab (28).

7. The filter cooler system (20) according to claim 5 or 6, wherein the plurality of claws (48, 48') comprises two pairs of claws (48) for engagement on two pairs of opposing side faces (50) of the at least one mounting tab (28).

8. The filter cooler system (20, 20') according to one of the preceding claims, wherein the holder (34) comprises two mounting rails (44), a grid frame (40), and a support leg (42) protruding from the grid frame (40).

9. The filter cooler system (20, 20') according to one of the preceding claims, wherein the holder (34) has at least one latching hook (52) for engagement on the cooler assembly (26).

10. The filter cooler system (20') according to one of the preceding claims, wherein the holder (34) has a centering hole (66) into which a centering pin (68) of the air duct (22) engages.

11. A motor vehicle (10) comprising the filter cooler system (20, 20') according to one of claims 1 to 10.

12. The motor vehicle (10) according to claim 11, further comprising a body (16) to which the at least one mounting tab (28) is fixed.

13. The motor vehicle (10) according to claim 11 or 12, further comprising an engine (12) and a front skirt (18),
wherein the filter cooler system (20, 20') is arranged at a front end of the motor vehicle (10), behind the front skirt (18) and in front of the engine (12).

## Patentansprüche

1. Filterkühlersystem (20, 20') für ein Kraftfahrzeug (10), wobei das Filterkühlersystem (20, 20') konfiguriert ist, um Staubpartikel aus der Umgebungsluft zu entfernen, um eine Staubproduktion während einer Verwendung des Kraftfahrzeugs (10) auszugleichen, um eine Gesamtstaubemissionsbilanz des Kraftfahrzeug s (10) zu verringern, das Filterkühlersystem (20, 20') umfassend:
eine Kühleranordnung (26), umfassend einen Flüssigkeitskühler zum Zuführen von Kühlflüssigkeit zu einem Motor des Kraftfahrzeugs (10);
einen Luftkanal (22), der mindestens eine Einlassöffnung (30) aufweist; und
eine Filteranordnung (24), umfassend ein Filterelement (32) und einen Halter (34), wobei das Filterelement (32) zwischen dem Luftkanal (22) und der Kühleranordnung (26) eingerichtet ist,
**dadurch gekennzeichnet, dass**
die Kühleranordnung (26), der Halter (34) und der Luftkanal (22) an mindestens einer gemeinsamen Montagelasche (28) angebracht sind, und
der Halter (34) zwischen dem Luftkanal (22) und der mindestens einen Montagelasche (28) eingeklemmt ist.

2. Filterkühlersystem (20, 20') nach Anspruch 1, wobei die Kühleranordnung (26), die Filteranordnung (24) und der Luftkanal (22) durch eine Schraube (54), die mindestens durch den Luftkanal (22) und in ein Schraubenloch (58) der mindestens einen Montagelasche (28) eindringt, mit der mindestens einen gemeinsamen Montagelasche (28) verschraubt sind.

3. Filterkühlersystem (20) nach Anspruch 2, wobei die Schraube (54) ferner den Halter (34) der Filteranordnung (24) durchdringt.

4. Filterkühlersystem (20, 20') nach einem der vorstehenden Ansprüche, wobei die Kühleranordnung (26) eine Montageöse (38) für einen Eingriff um die mindestens eine Montagelasche (28) herum umfasst.

5. Filterkühlersystem (20, 20') nach einem der vorstehenden Ansprüche, wobei der Halter (34) der Filteranordnung (24) eine Vielzahl von Klauen (48, 48') für den Eingriff an verschiedenen Seiten der mindestens einen Montagelasche (28) umfasst.

6. Filterkühlersystem (20, 20') nach Anspruch 5, wobei die Vielzahl von Klauen (48, 48') zwei Klauen (48, 48') für den Eingriff an zwei angrenzenden Seitenflächen (50) der mindestens einen Montagelasche (28) umfasst.

7. Filterkühlersystem (20) nach Anspruch 5 oder 6, wobei die Vielzahl von Klauen (48, 48') zwei Paare von Klauen (48) für den Eingriff an zwei Paaren von gegenüberliegenden Seitenflächen (50) der mindestens einen Montagelasche (28) umfasst.

8. Filterkühlersystem (20, 20') nach einem der vorstehenden Ansprüche, wobei der Halter (34) zwei Montageschienen (44), einen Gitterrahmen (40) und ein Stützbein (42), das von dem Gitterrahmen (40) vorsteht, umfasst.

9. Filterkühlersystem (20, 20') nach einem der vorstehenden Ansprüche, wobei der Halter (34) mindestens einen Rasthaken (52) für den Eingriff an der Kühleranordnung (26) aufweist.

10. Filterkühlersystem (20') nach einem der vorstehenden Ansprüche, wobei der Halter (34) ein Zentrierloch (66) aufweist, in das ein Zentrierstift (68) des Luftkanals (22) eingreift.

11. Kraftfahrzeug (10), umfassend das Filterkühlersystem (20, 20') nach einem der Ansprüche 1 bis 10.

12. Kraftfahrzeug (10) nach Anspruch 11, ferner umfassend eine Karosserie (16), an der die mindestens eine Montagelasche (28) angebracht ist.

13. Kraftfahrzeug (10) nach Anspruch 11 oder 12, ferner umfassend einen Motor (12) und eine Frontschürze (18),
wobei das Filterkühlersystem (20, 20') an einem vorderen Ende des Kraftfahrzeugs (10), hinter der Frontschürze (18) und vor dem Motor (12), eingerichtet ist.

## Revendications

1. Système de filtre et refroidisseur (20, 20') pour un véhicule automobile (10), le système de filtre et refroidisseur (20, 20') étant conçu pour éliminer des particules de poussière de l'air ambiant pour compenser la production de poussière pendant l'utilisation du véhicule automobile (10), de manière à réduire le bilan total d'émission de poussière du véhicule automobile (10), le système de filtre et refroidisseur (20, 20') comprenant :
un ensemble de refroidissement (26) comprenant un refroidisseur de liquide pour alimenter un moteur du véhicule automobile (10) en liquide de refroidissement ;
un conduit d'air (22) ayant au moins une ouverture d'entrée (30) ; et
un ensemble filtre (24) comprenant un élément filtrant (32) et un support (34), l'élément filtrant (32) étant agencé entre le conduit d'air (22) et l'ensemble de refroidissement (26),
**caractérisé en ce que**
l'ensemble de refroidissement (26), le support (34) et le conduit d'air (22) sont fixés à au moins une patte de montage commune (28), et
le support (34) est serré entre le conduit d'air (22) et l'au moins une patte de montage (28).

2. Système de filtre et refroidisseur (20, 20') selon la revendication 1, dans lequel l'ensemble de refroidissement (26), l'ensemble filtre (24) et le conduit d'air (22) sont vissés sur l'au moins une patte de montage commune (28) par une vis (54) pénétrant au moins à travers le conduit d'air (22) et dans un trou de vis (58) de l'au moins une patte de montage (28).

3. Système de filtre et refroidisseur (20) selon la revendication 2, dans lequel la vis (54) pénètre en outre à travers le support (34) de l'ensemble filtre (24).

4. Système de filtre et refroidisseur (20, 20') selon l'une des revendications précédentes, dans lequel l'ensemble de refroidissement (26) comprend un œillet de montage (38) pour une mise en prise autour de l'au moins une patte de montage (28).

5. Système de filtre et refroidisseur (20, 20') selon l'une des revendications précédentes, dans lequel le support (34) de l'ensemble filtre (24) comprend une pluralité de griffes (48, 48') pour une mise en prise sur différents côtés de l'au moins une patte de montage (28).

6. Système de filtre et refroidisseur (20, 20') selon la revendication 5, dans lequel la pluralité de griffes (48, 48') comprend deux griffes (48, 48') pour une mise en prise sur deux faces latérales adjacentes (50) de l'au moins une patte de montage (28).

7. Système de filtre et refroidisseur (20) selon la revendication 5 ou 6, dans lequel la pluralité de griffes (48, 48') comprend deux paires de griffes (48) pour une mise en prise sur deux paires de faces latérales opposées (50) de l'au moins une patte de montage (28).

8. Système de filtre et refroidisseur (20, 20') selon l'une des revendications précédentes, dans lequel le support (34) comprend deux rails de montage (44), un cadre de grille (40), et un pied de support (42) faisant saillie du cadre de grille (40).

9. Système de filtre et refroidisseur (20, 20') selon l'une des revendications précédentes, dans lequel le support (34) a au moins un crochet d'encliquetage (52) pour une mise en prise sur l'ensemble de refroidissement (26).

10. Système de filtre et refroidisseur (20') selon l'une des revendications précédentes, dans lequel le support (34) a un trou de centrage (66) dans lequel vient en prise un pion de centrage (68) du conduit d'air (22).

11. Véhicule automobile (10) comprenant le système de filtre et refroidisseur (20, 20') selon l'une des revendications 1 à 10.

12. Véhicule automobile (10) selon la revendication 11, comprenant en outre une carrosserie (16) à laquelle est fixée l'au moins une patte de montage (28).

13. Véhicule automobile (10) selon la revendication 11 ou 12, comprenant en outre un moteur (12) et une jupe avant (18),
dans lequel le système de filtre et refroidisseur (20, 20') est agencé à une extrémité avant du véhicule automobile (10), derrière la jupe avant (18) et devant le moteur (12).
